# EUROPÄISCHE PATENTSCHRIFT

(11) **EP 2 672 099 B1**
(45) Veröffentlichungstag und Bekanntmachung des Hinweises auf die Patenterteilung: **24.02.2016**
(21) Anmeldenummer: 12004324.5
(22) Anmeldetag: 06.06.2012
(51) Int. Cl.: F02K 9/97

(54) **Vorrichtung zum Verschliessen und Öffnen einer Düse, insbesondere einer Expansionsdüse eines Raketentriebwerks**
Device for closing and opening a nozzle, in particular an expansion nozzle of a rocket engine
Dispositif de fermeture et d'ouverture d'une tuyère, en particulier une tuyère d'expansion d'un moteur de fusée

(43) Veröffentlichungstag der Anmeldung: 11.12.2013
(73) Patentinhaber: Airbus DS GmbH, 82024 Taufkirchen (DE)
(72) Erfinder: Sperber, Franz, 83059 Kolbermoor (DE); Kislinger, Michael, 83629 Großpienzenau (DE)
(74) Vertreter: Avenhaus, Beate

(56) Entgegenhaltungen:
- DE-A1- 2 241 624
- DE-A1- 3 620 173
- US-A- 3 063 240
- US-A- 3 329 089

## Beschreibung

Die Erfindung betrifft eine Vorrichtung zum Verschliessen und Öffnen einer Düse, insbesondere einer Expansionsdüse eines Raketentriebwerks, gemäß Anspruch 1.

Aus der Auslegeschrift DE1181494 ist eine Zündeinrichtung für Feststoff-Raketentriebwerke bekannt, die einen auf die Düse eines Feststoff-Raketentriebwerks aufschraubbaren Zündkapselträger aufweist. Der Zündkapselträger besitzt einen unter der Wirkung eines vorbestimmten Druckes sich selbsttätig lösenden Düsenverschluss, in dem eine Zündkapsel angeordnet ist. Ein Scherstift sichert hierbei ein Verschlussteil einer Öffnung des Zündkapselträgers. Der sich nach Zündung des Feststoff-Raketentriebwerks aufbauende Druck baut an den sich auf dem Scherstift abstützenden Kanten des Verschlussteils Kräfte auf, die ab einem bestimmten Druck ein Abscheren des Schwerstifts und damit Freigeben der Düse bewirken. Durch die Düse austretende Gase stoßen das Verschlussteil mit Resten der Zündkapsel sowie einer Verdämmungsmasse und darin eingebetteten Resten des Scherstifts in Form eines Pfropfens aus der Öffnung des Zündkapselträgers aus. Als nachteilig erweist sich bei dieser Zündeinrichtung die Gefahr von Beschädigungen des Raketentriebwerks aufgrund des ausgestoßenen Pfropfens.

Die deutsche Offenlegungsschrift DE 3620173 A1 löst das Problem des unkontrollierten Abstoßens von Komponenten und die damit einhergehende Gefährdung durch herumfliegende Teile durch eine Fangvorrichtung für einen lösbar an einer Düsenöffnung einer Rakete angebrachten Ringkörper, der Teil eines Verschlusskörpers zum Verschließen einer Rakete ist. Am Ringkörper sind mehrere Scheibensegmente einer Berstscheibe aufklappbar befestigt, die bei Überscheiten eines bestimmten Drucks im Raketen-Triebwerk aufplatzt, wodurch mit den Scheibensegmenten der Berstscheibe verbundene Schwenkorgane nach außen geschwenkt werden. Die nach außen geschwenkten Organe lösen eine Verriegelungsvorrichtung aus, wodurch die Verbindung zu einem Düsenring gelöst wird und die gesamte Verschlussvorrichtung einschließlich des Ringkörpers im Startrohr der Rakete verbleibt und von der Fangvorrichtung am Verlassen des Startrohrs gehindert wird. Als nachteilig wird bei dieser Technik das Auslösen durch einen Überdruck angesehen, was bei bestimmten Einsatzfällen unerwünscht und sogar unzulässig sein kann.

Eine der vorliegenden Erfindung zugrunde liegende Aufgabe besteht daher darin, eine Vorrichtung zum Verschliessen und Öffnen einer Düse, insbesondere einer Expansionsdüse eines Raketentriebwerks, anzugeben, die einerseits den Nachteil von unkontrolliert umherfliegenden Teilen beim Öffnen vermeidet und andererseits auch in Fällen einsetzbar ist, bei denen eine andere Art des Öffnens als durch Überdruck erforderlich ist.

Diese Aufgabe wird durch eine Vorrichtung zum Verschließen und Öffnen einer Düse, insbesondere einer Expansionsdüse eines Raketentriebwerks, mit den Merkmalen von Anspruch 1 gelöst. Weitere Ausgestaltungen der Erfindung sind Gegenstand der abhängigen Ansprüche.

Ein der vorliegenden Erfindung zugrunde liegender Gedanke besteht darin, eine Betätigungsvorrichtung bei einer Vorrichtung zum Verschliessen und Öffnen einer Düse vorzusehen, mit welcher die Düse nicht nur durch Überdruck oder gar eine Zündkapsel, sondern rein mechanisch geöffnet werden kann. Dadurch kann diese Vorrichtung auch dort eingesetzt werden, wo ein reines Auslösen durch Überdruck unerwünscht oder unzulässig ist.

Die Erfindung betrifft nun eine Vorrichtung zum Verschliessen und Öffnen einer Düse, insbesondere einer Expansionsdüse eines Raketentriebwerks, mit einem zum Einführen in eine Düse vorgesehenen Düsen-Verschlusskörper, der einen ringförmigen an die Öffnung der Düse angepassten Endabschnitt aufweist, mindestens einer im Randbereich des ringförmigen Endabschnitts angebrachten Verriegelungsvorrichtung, die in einer Verschlussstellung einen ringförmigen Flansch der Öffnung der Düse so umgreifen kann, dass der in die Düse eingeführte Düsen-Verschlusskörper an der Düsen-Öffnung gesichert die Düse verschließt, einer zwischen einer Sperr- und einer Freigabestellung bewegbaren Sperrvorrichtung, die in der Sperrstellung die Verriegelungsvorrichtung in der Verschlussstellung sperrt und in der Freigabestellung die Verriegelungsvorrichtung freigibt, so dass der Düsen-Verschlusskörper aus der Düse entfernt werden kann, und einer Betätigungsvorrichtung zum Bewegen der Sperrvorrichtung.

Durch die konstruktive Gestaltung dieser Vorrichtung kann eine Düse über die Betätigungsvorrichtung mechanisch geöffnet oder geschlossen werden. Die erfindungsgemäße Vorrichtung ermöglicht ferner prinzipiell eine Wiederverwendung, beispielsweise indem nach einem Öffnen einer Düse die Vorrichtung wieder in eine Düse eingeführt, die Verriegelungsvorrichtung in die Verschlussstellung gebracht und die Sperrvorrichtung in die Sperrstellung bewegt wird. Vor allem bei mehrstufigen Raketentriebwerken weist die erfindungsgemäße Vorrichtung den Vorteil auf, dass sie über die Betätigungsvorrichtung mit einem abgetrennten Triebwerksteil gekoppelt werden kann, so dass keine Teile beim Öffnen einer Düse des Raketentriebwerks unkontrolliert umherfliegen und möglicherweise Schäden verursachen können. Aufgrund der rein mechanischen Funktionsweise wird zudem weder Sprengstoff zum Aufsprengen noch eine aufwendige Steuerelektronik mit elektromagnetischen Steuerelementen zum elektronisch gesteuerten Öffnen benötigt.

Der Düsen-Verschlusskörper kann insbesondere einen an den ringförmigen Endabschnitt anschließenden Mittelabschnitt mit einer Bohrung zur Lagerung der Sperrvorrichtung und einen an den Mittelabschnitt anschließenden Endabschnitt mit einer Abdichtung zum Verschliessen der Düse aufweisen. Mit Hilfe des Mittel- und Endabschnitts kann der Düsen-Verschlusskörper an verschiedene Düsenformen, -lasten und -abmessungen angepasst werden. Weitere Abdichtungen können auch am Mittelabschnitt und am ringförmigen Endabschnitt des Düsen-Verschlusskörpers vorgesehen sein, wodurch die Abdichtung einer Düse weiter verbessert werden kann.

Die Verriegelungsvorrichtung kann ein erstes elastisches Element, insbesondere eine Drehfeder, aufweisen, das auf die Verriegelungsvorrichtung eine derart große Kraft ausübt, dass sie in eine Öffnungsstellung gebracht wird, in der sie nicht den ringförmigen Flansch der Öffnung der Düse umgreifen kann. Dadurch kann, wenn sich die Sperrvorrichtung in Freigabestellung befindet, die Verriegelungsvorrichtung schnell von der Verschluss- in die Öffnungsstellung gebracht werden, so dass die Sicherung zum Verschließen der Düse aufgehoben wird.

Weiterhin weist die Verriegelungsvorrichtung einen an ihr gelenkig befestigten Kipphebel und ein zweites elastisches Element, insbesondere eine Blattfeder, auf, das auf den Kipphebel eine Kraft ausübt, um den Kipphebel in eine Position zu bringen, in der er in der Verschlussstellung der Verriegelungsvorrichtung den ringförmigen Flansch der Öffnung der Düse umgreift. Dies ermöglicht eine zweite Öffnungsfunktion insbesondere für Notfälle, beispielsweise wenn die Sperrvorrichtung klemmt und nicht von der Sperr- und die Freigabestellung bewegbar ist. Durch einen auf die Vorrichtung, insbesondere den Verschlusskörper ausgeübten Druck kann der Kipphebel gegen die vom zweiten elastischen Element ausgeübte Kraft über den ringförmigen Flansch der Öffnung der Düse aufgedrückt werden, so dass die Verriegelungsvorrichtung in der Verschlussstellung vom Flansch der Düsenöffnung weggedrückt werden kann. Hierbei kann das zweite elastische Element auf einen vorgegebenen Druck so abgestimmt werden, dass bei Überschreiten des vorgegebenen Drucks die auf den Kipphebel über den Flansch wirkende Kraft die Kraft des elastischen Elements übersteigt und der Kipphebel von der Verschluss- in die Öffnungsstellung gedrückt wird.

Die Sperrvorrichtung einen Sperrbolzen aufweist, der über einen Sperrstift bewegt werden kann, der in einer im Düsen-Verschlusskörper angeordneten Führungshülse in Axialrichtung zum Düsen-Verschlusskörper beweglich gelagert ist. Der Sperrbolzen kann beispielsweise durch eine am Sperrstift angebrachte Zugvorrichtung bewegt werden.

Der Sperrstift kann ferner durch eine im Düsen-Verschlusskörper angeordnete Rückstell-Feder in einer Ruhestellung gehalten werden, in welcher der Sperrbolzen nicht bewegt wird. Um den Sperrbolzen zu bewegen, muss eine Mindestkraft zum Überwinden der Kraft der Rückstell-Feder aufgewendet werden, um den Sperrstift so weit zu bewegen, dass er den Sperrbolzen mitnimmt. Diese konstruktive Ausgestaltung ist insbesondere in Umgebungen mit hohen thermischen und mechanischen Belastungen von Vorteil, da dadurch die Gefahr eines unerwünschten und unbeabsichtigten Bewegens des Sperrbolzens zumindest verringert werden kann.

Die Betätigungsvorrichtung kann ein Seil oder Kabel aufweisen, das an einem Ende mit der Sperrvorrichtung verbunden ist und als Auffanghilfe für die Vorrichtung dienen kann. Hierdurch kann mit einem relativ geringen Aufwand das unkontrollierte Umherfliegen der Vorrichtung nach dem Öffnen einer Düse verhindert werden. Weiterhin ermöglicht ein Seil oder Kabel im Gegensatz zu einem Gestänge eine relativ flexible und robuste Betätigung der Vorrichtung.

Eine weitere Ausführungsform der Erfindung betrifft eine Düse; insbesondere eine Expansionsdüse eines Raketentriebwerks, mit einer Vorrichtung zum Verschliessen und Öffnen der Düse nach der Erfindung und wie vorangehend erläutert.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen, in der Zusammenfassung und in den Zeichnungen werden die in der hinten angeführten Liste der Bezugszeichen verwendeten Begriffe und zugeordneten Bezugszeichen verwendet.

Die Zeichnungen zeigen in
Fig. 1 ein Ausführungsbeispiel einer Expansionsdüse für ein Raketentriebwerk gemäß der Erfindung;
Fig. 2 rechts die in Fig. 1 gezeigte Expansionsdüse in einer perspektivischen Schnittdarstellung und links eine perspektivische Darstellung der Düsenverschlussvorrichtung;
Fig. 3 eine perspektivische Darstellung der links in Fig. 2 gezeigten Düsenverschlussvorrichtung mit ausgeklappten Kipphebeln zum Entfernen aus der Expansionsdüse;
Fig. 4 eine Schnittdarstellung durch den unteren Teil der in Fig. 1 gezeigten Expansionsdüse und der in ihr gesicherten Düsenverschlussvorrichtung;
Fig. 5 eine Schnittdarstellung durch den unteren Teil der in Fig. 1 gezeigten Expansionsdüse, bei der die Düsenverschlussvorrichtung ungesichert ist und die Kipphebel der Düsenverschlussvorrichtung über eine geneigte Fläche des ringförmigen Flansches zur Seite gedrückt werden; und
Fig. 6 die in Fig. 5 gezeigte Situation in perspektivischer Darstellung.

In der folgenden Beschreibung können gleiche, funktional gleiche und funktional zusammenhängende Elemente mit den gleichen Bezugszeichen versehen sein. Absolute Werte sind im Folgenden nur beispielhaft angegeben und sind nicht als die Erfindung einschränkend zu verstehen.

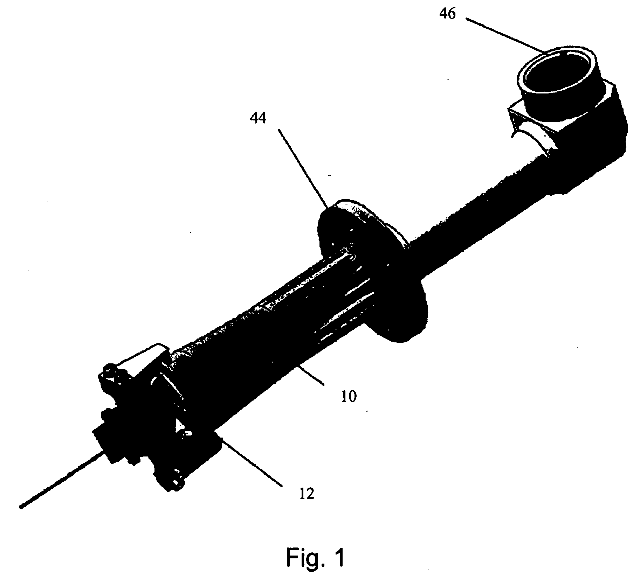

Fig. 1 zeigt eine Expansiondsdüse 10 für ein Raketentriebwerk, beispielsweise ein mehrstufiges Triebwerk einer Trägerrakete. Die Düse 10 wird über einen Befestigungsflansch 44 im Triebwerk befestigt. Ein angewinkeltes und mit der Düse 10 gekoppeltes Rohr bildet den Düseneinlass. Die Düse 10 kann mit einem Verschlusskörper 12 verschlossen und abgedichtet werden. Der Verschlusskörper 12 ist über einen speziellen Mechanismus an der Düse gesichert, wie im Folgenden noch im Detail erläutert wird.

Der Mechanismus ermöglicht über ein mechanisches Signal, nämlich eine über ein Seil oder Kabel erzeugte Zugkraft, das Lösen der Sicherung des Verschlusskörpers 12 in der Düse 10, so dass der Körper 12 aus der Düse 10 herausgezogen oder herausgedrückt werden kann und die Düse 10 freigibt (Hauptfreigabefunktion des Mechanismus). Der Mechanismus kann hierbei so gestaltet sein, dass zum Lösen der Sicherung eine Kraft von kleiner oder gleich etwa 100 Newton erforderlich ist. Der Mechanismus ermöglicht auch redundant zur Hauptfreigabefunktion eine Freigabe der Düse bei Überschreiten eines bestimmten Drucks auf den Verschlusskörper 12 über den Düseneinlass 46 (Hilfsfreigabefunktion des Mechanismus), so dass bei einem Ausfall der Hauptfreigabefunktion wie beispielsweise bei einem klemmenden Kabel oder Seil die Düse 10 dennoch geöffnet werden kann. Der Mechanismus kann hierbei si gestaltet sein, dass zum Auslösen der redundanten Freigabe eine Kraft von kleiner oder gleich etwa 370 Newton erforderlich ist, die beispielsweise ab einem bestimmten Druck im Düseneinlas 46 auftreten kann. Der Verschlusskörper 12 mit dem Sicherungsmechanismus ist als von der Düse 10 abwerfbares Teil ausgebildet.

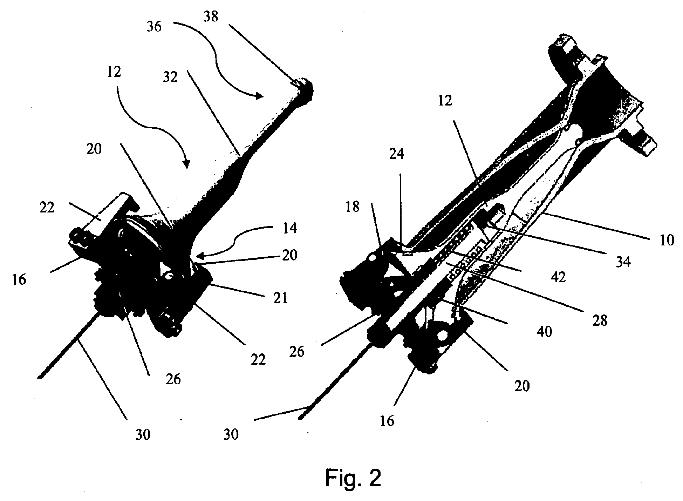

Der Aufbau und die Funktionsweise des Mechanismus werden nun im Folgenden unter Bezug auf die Fig. 2-6 ausführlich erläutert.

Fig. 2 zeigt links den Verschlusskörper 12 für die Düse 10. Der längliche Verschlusskörper 12 weist einen in Axialrichtung des Körpers 12 ringförmigen Endabschnitt 14 auf, der an die Öffnung der Düse 10 so angepasst ist, dass er diese abdichten kann, wenn der Verschlusskörper 12 in die Düse 10 vollständig eingeführt ist. Zur besseren Abdichtung kann am Endabschnitt 14 noch Dichtring vorgesehen sein. An den Endabschnitt 14 schließt sich ein Mittelabschnitt 32 an, der wie der Endabschnitt 14 eine Bohrung 34 aufweist. Schließlich setzt sich der Mittelabschnitt 32 in einen stiftförmigen Endabschnitt 36 fort, der an seinem kugelförmigen Ende eine Abdichtung 38 in Form eines Dichtrings zum Verschliessen der Düse 10 aufweist.

Unterhalb des Endabschnitts 14 des Verschlusskörpers 12 ist ein Sperrbolzen 26 vorgesehen, der drei gelenkig am Randbereich des Endabschnitts 14 jeweils über eine Achse 21 gelagerte Kipphebelträger 16 sperren kann. Jeder Kipphebelträger 16 weist einen mit ihm über die gemeinsame Kipphebelachse 21 und eine mit dem Träger 16 verschraubte Blattfeder 22 gekoppelten Kipphebel 20 auf. Die Blattfeder 22 drückt den Kipphebel 20 gegen den Verschlusskörper 12. Jeder Kipphebel 20 besitzt einen hakenförmigen Endabschnitt, mit dem er um einen ringförmigen Flansch 24 der Düsenöffnung greifen und den Verschlusskörper 12 in der Düse 10 durch Verriegeln sichern kann.

Im links in Fig. 2 gezeigten Zustand des Verschlusskörpers 12 befindet sich der Sperrbolzen 26 in einer Sperrstellung, in welcher die Kipphebelträger 16 nicht nach außen geklappt werden können. Die Kipphebel 20 werden durch die Blattfedern 22 gegen den ringförmigen Flansch 24 gedrückt, so dass der Verschlusskörper 12 in der Düse gesichert ist. Wird auf das Seil oder Kabel 30 eine Zugkraft ausgeübt und dadurch der Sperrbolzen 26 von einer Sperr-in eine Freigabestellung (aus dem Verschlusskörper 12 heraus) bewegt, können die Kipphebelträger 16 zusammen mit den Kipphebeln 20 nach außen, d.h. von der Düse 10 weg geklappt werden. Dadurch kann der Verschlusskörper 12 aus der Düse 10 entfernt werden. Das Herausklappen der Kipphebelträger 16 und Kipphebel 20 kann durch Drehfedern bewirkt werden, die auf den Kipphebelachsen 21 gelagert sind und deren Federbeine entsprechend mit den Kipphebelträgern 16 und Kipphebeln 20 verklemmt sind.

Rechts ist in Fig. 2 der Verschlussmechanismus von innen gezeigt. In einer Bohrung des Sperrbolzens 26 ist ein Ende eines Sperrstifts 28 eingeführt. Der Sperrstift 28 ist in einer Führungshülse 40 in Axialrichtung des Verschlusskörpers 12 beweglich gelagert, die in die Bohrung 34 des Verschlusskörpers 12 eingepasst ist. Eine in der Bohrung 34 gelagerte Rückstell-(Spiral-)Feder 42 über auf ein Gegenlager des Sperrstifts 28 eine Kraft aus, so dass der Sperrstift 28 in die Bohrung 34 hinein gedrückt wird.

Das Seil oder Kabel 30 ist mit dem Ende des Sperrstifts 28 verbunden, das in der Bohrung des Sperrbolzens 26 gelagert ist. Hierzu ist das Seil oder Kabel 30 durch eine Öffnung des Sperrbolzens 26 hindurchgeführt. Eine auf das Seil oder Kabel 30 ausgeübte Zugkraft, die größer als die Kraft der Feder 42 ist, kann somit den Sperrstift 28 aus der Bohrung 34 herausziehen, bis er an einen Anschlag in der Bohrung im Sperrbolzen 26 auftrifft, so dass der Sperrbolzen 26 in die Freigabestellung bewegt wird. In der Freigabestellung bewirkt die Kraft der Drehfedem 18, dass sich die Kipphebelträger 16 um ihre Achse 21 drehen und die Kipphebel 20 mitnehmen, die so nach außen klappen und die Verriegelung des Verschlusskörpers 12 an der Düse 10 freigeben.

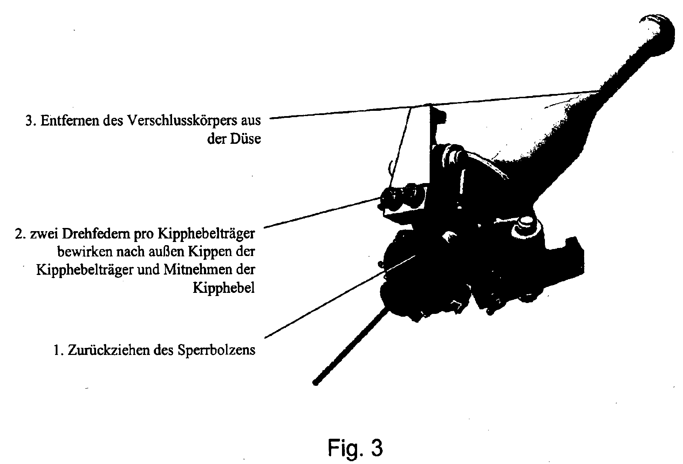

In Fig. 3 sind die einzelnen Schritte beim Freigeben des Verschlusskörpers 12 nochmals aufgelistet:1. der Sperrbolzen wird durch eine auf das Seil öder Kabel wirkende Zugkraft zurückgezogen; 2. zwei Drehfedem pro Kipphebelträger üben auf die Träger Drehkräfte aus, welche die Träger nach außen kippen; die Träger nehmen hierbei die Kipphebel mit, die somit vom Flansch des Düse weggeklappt werden; 3. nun kann der freigegebene und nicht mehr gesicherte Verschlusskörper aus der Düse entfernt werden, beispielsweise indem er durch den in der Düse herrschenden Druck ausgestoßen oder durch eine noch auf das Kabel oder Seil wirkende Zugkraft aus der Düse herausgezogen wird.

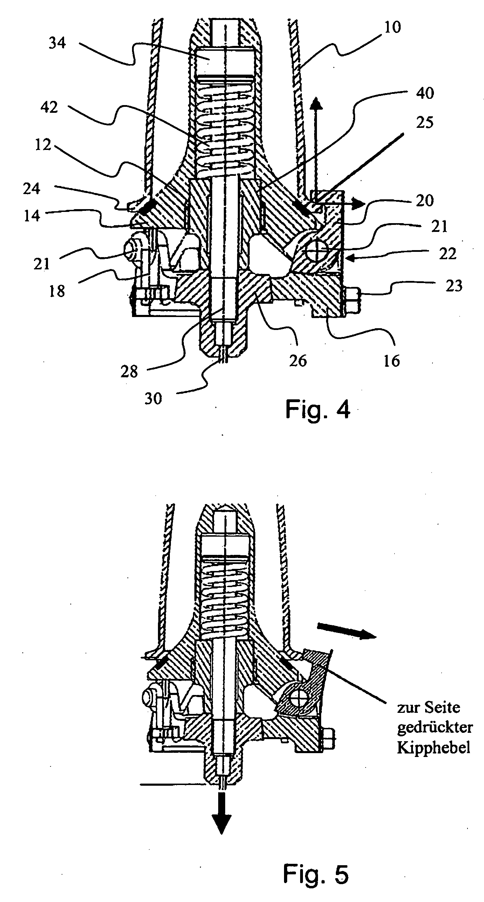

Im Folgenden wird nun anhand der Fig. 4-6 die Hilfsfreigabefunktion erläutert, welche durch den erfindungsgemäßen Mechanismus implementiert werden kann. Wie bereits oben angedeutet kommt die Hilfsfreigabefunktion dann zum Tragen, wenn die Hautpfreigabefunktion durch Bewegen des Sperrbolzens von der Sperr- und die Freigabestellung nicht funktioniert oder nicht durch Ziehen am Seil oder Kabel 30 aktiviert wird. Wie in der Schnittzeichnung in Fig. 4 erkennbar ist, ist der Kipphebel 20 um die Achse 21 unabhängig vom Kipphebelträger 16 bewegbar. Nur die Blattfeder 22, die mit dem Kipphebelträger 16 durch eine Verschraubung 23 verbunden ist, hält den Kipphebel 20 in einer Position, in welcher sein hakenartig ausgebildetes eines Ende den Flansch 24 umgreift und den Verschlusskörper 12 in der Düse 10 sichert. Gegen die Kraft der Blattfeder 22 kann der Kipphebel 20 jedoch nach außen gedrückt werden, wie es in Fig. 5 gezeigt ist.

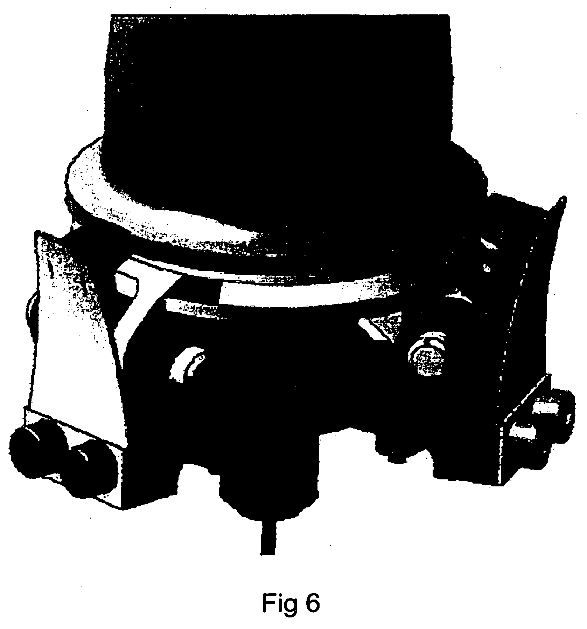

Wirkt eine ausreichend große Kraft in Axialrichtung auf den Verschlusskörper 12 wird der Kipphebel 20 über die geneigte Fläche 25 des Flansches 24 der Düsen-Öffnung nach außen gegen die Kraft der Blattfeder 22 gedrückt und "rutscht" über den Flansch 24, wodurch der Verschlusskörper 12 trotz des sich in Sperrstellung befindlichen Sperrbolzens 26 aus der Düse 10 bewegt werden kann. Fig. 6 zeigt die Situation, bei der die Kipphebel durch den Flansch der Düse nach außen gedrückt werden, in perspektivischer Ansicht.

Mit der vorliegenden Erfindung wird eine rein mechanisch auslösbare Vorrichtung zum Verschliessen und Öffnen einer Düse geschaffen, die zudem eine Hilfsfreigabefunktion implementieren kann, wenn die Hauptfreigabefunktion ausfällt.

### BEZUGSZEICHEN

- 10: Düse
- 12: Düsen-Verschlusskörper
- 14: ringförmiger an die Öffnung der Düse angepasster Endabschnitt des Düsen-Verschlusskörpers 12
- 16: Kipphebelträger
- 18: Drehfeder
- 20: Kipphebel
- 21: Kipphebelachse
- 22: Blattfeder
- 23: Verschraubung der Blattfeder 22
- 24: ringförmiger Flansch der Düsen-Öffnung
- 25: geneigte Fläche des Flansches 24
- 26: Sperrbolzen
- 28: Sperrstift
- 30: Seil oder Kabel
- 32: Mittelabschnitt des Düsen-Verschlusskörpers 12 mit Bohrung 34
- 34: Bohrung
- 36: Endabschnitt mit Abdichtung 38 zum Verschliessen der Düse
- 38: Abdichtung
- 40: Führungshülse für den Sperrstift 28
- 42: Rückstell-Feder für den Sperrstift 28
- 44: Befestigungsflansch der Düse 10
- 46: Düseneinlass

## Patentansprüche

1. Vorrichtung zum Verschliessen und Öffnen einer Düse (10), insbesondere einer Expansionsdüse eines Raketentriebwerks, mit
- einem zum Einführen in eine Düse vorgesehenen Düsen-Verschlusskörper (12), der einen ringförmigen an die Öffnung der Düse angepassten Endabschnitt (14) aufweist,
- mindestens einer im Randbereich des ringförmigen Endabschnitts angebrachten Verriegelungsvorrichtung (16, 18, 20, 22), die in einer Verschlussstellung einen ringförmigen Flansch (24) der Öffnung der Düse so umgreifen kann, dass der in die Düse eingeführte Düsen-Verschlusskörper an der Düsen-Öffnung gesichert die Düse verschließt,
- einer zwischen einer Sperr- und einer Freigabestellung bewegbaren Sperrvorrichtung (26, 28), die in der Sperrstellung die Verriegelungsvorrichtung in der Verschlussstellung sperrt und in der Freigabestellung die Verriegelungsvorrichtung freigibt, so dass der Düsen-Verschlusskörper aus der Düse entfernt werden kann, und
- einer Betätigungsvorrichtung (30) zum Bewegen der Sperrvorrichtung,
**dadurch gekennzeichnet, dass**
die Verriegelungsvorrichtung mindestens einen gelenkig am Randbereich des Endabschnitts (14) über eine Achse (21) gelagerten Kipphebelträger (16) und einen mit dem Kipphebelträger (16) über die Achse (21) und ein elastisches Element (22) gekoppelten Kipphebel (20) aufweist, wobei das elastische Element auf den Kipphebel eine Kraft ausübt, um den Kipphebel in eine Position zu bringen, in der er in der Verschlussstellung der Verriegelungsvorrichtung den ringförmigen Flansch der Öffnung der Düse umgreift, und
die Sperrvorrichtung einen Sperrbolzen (26) und einen in einer im Düsen-Verschlusskörper angeordneten Führungshülse (40) in Axialrichtung zum Düsen-Verschlusskörper beweglich gelagerten Sperrstift (28) aufweist, wobei der Sperrbolzen über den Sperrstift von der Sperr- in die Freigabestellung bewegt werden kann, wobei der Sperrbolzen in der Sperrstellung den mindestens einen Kipphebelträger sperrt, so dass dieser nicht von der Düse weggeklappt werden kann, und wobei in der Freigabestellung des Sperrbolzens der mindestens eine Kipphebelträger zusammen mit dem Kipphebel von der Düse weggeklappt werden kann.

2. Vorrichtung nach Anspruch 1, **dadurch gekennzeichnet, dass** der Düsen-Verschlusskörper einen an den ringförmigen Endabschnitt anschließenden Mittelabschnitt (32) mit einer Bohrung (34) zur Lagerung der Sperrvorrichtung und einen an den Mittelabschnitt anschließenden Endabschnitt (36) mit einer Abdichtung (38) zum Verschliessen der Düse aufweist.

3. Vorrichtung nach Anspruch 1 oder 2, **dadurch gekennzeichnet, dass** die Verriegelungsvorrichtung ein erstes elastisches Element (18), insbesondere eine Drehfeder, aufweist, das auf die Verriegelungsvorrichtung eine derart große Kraft ausübt, dass sie in eine Öffnungsstellung gebracht wird, in der sie nicht den ringförmigen Flansch der Öffnung der Düse umgreifen kann.

4. Vorrichtung nach einem der vorhergehenden Ansprüche, **dadurch gekennzeichnet, dass** im Düsen-Verschlusskörper eine Rückstell-Feder (42) angeordnet ist, die den Sperrstift in eine Ruhestellung drückt.

5. Vorrichtung nach einem der vorhergehenden Ansprüche, **dadurch gekennzeichnet, dass** die Betätigungsvorrichtung ein Seil oder Kabel (30) aufweist, das an einem Ende mit der Sperrvorrichtung verbunden ist und als Auffanghilfe für die Vorrichtung dient.

6. Düse (10), insbesondere eine Expansionsdüse eines Raketentriebwerks, mit einer Vorrichtung zum Verschliessen und Öffnen der Düse nach einem der vorhergehenden Ansprüche.

## Claims

1. Device for closing and opening a nozzle (10), in particular an expansion nozzle of a rocket engine,
- having a nozzle-closure body (12), which is provided for introduction into a nozzle and has an annular end portion (14) is adapted to the opening of the nozzle,
- having at least one locking device (16, 18, 20, 22), which is fitted in the peripheral region of the annular end portion and, in a closure position, can engage around an annular flange (24) of the opening of the nozzle such that the nozzle-closure body introduced into the nozzle, in a state in which it is secured on the nozzle opening, closes the nozzle,
- having a blocking device (26, 28), which can be moved between a blocking position and a freeing position and, in the blocking position, blocks the locking device in the closure position and, in the freeing position, frees the locking device, and therefore the nozzle-closure body can be removed from the nozzle, and
- having an actuating device (30) for moving the blocking device,
**characterized in that**
the locking device has at least one tilting-lever carrier (16), which is mounted in an articulated manner on the peripheral region of the end portion (14) via a pin (21), and a tilting lever (20), which is coupled to the tilting-lever carrier (16) via the pin (21) and an elastic element (22), wherein the elastic element subjects the tilting lever to a force in order to move the tilting lever into a position in which, in the closure position of the locking device, it engages around the annular flange of the opening of the nozzle, and
the blocking device has a blocking bolt (26) and a blocking pin (28), which is mounted in a guide sleeve (40), arranged in the nozzle-closure body, such that it can be moved in the axial direction in relation to the nozzle-closure body, wherein the blocking bolt can be moved, via the blocking pin, from the blocking position into the freeing position, wherein the blocking bolt, in the blocking position, blocks the at least one tilting-lever carrier, so that the latter cannot be swung away from the nozzle, and wherein, in the freeing position of the blocking bolt, the at least one tilting-lever carrier can be swung away from the nozzle together with the tilting lever.

2. Device according to Claim 1, **characterized in that** the nozzle-closure body has a central portion (32), which follows the annular end portion and has a bore (34) for mounting the blocking device, and an end portion (36), which follows the central portion and has a sealing means (38) for closing the nozzle.

3. Device according to Claim 1 or 2, **characterized in that** the locking device has a first elastic element (18), in particular a torsion spring, which subjects the locking device to such a high force that the locking device is moved into an open position, in which it cannot engage around the annular flange of the opening of the nozzle.

4. Device according to one of the preceding claims, **characterized in that** the nozzle-closure body has arranged in it a restoring spring (42), which forces the blocking pin into a rest position.

5. Device according to one of the preceding claims, **characterized in that** the actuating device has a rope or cable (30), which is connected at one end to the blocking device and serves as a catching aid for the device.

6. Nozzle (10), in particular an expansion nozzle of a rocket engine, having a device for closing and opening the nozzle according to one of the preceding claims.

## Revendications

1. Dispositif de fermeture et d'ouverture d'une tuyère (10), en particulier une tuyère d'expansion d'un moteur de fusée, comprenant
- un corps de fermeture de tuyère (12) prévu pour être introduit dans une tuyère, qui présente une partie d'extrémité (14) de forme annulaire adaptée à l'ouverture de la tuyère,
- au moins un dispositif de verrouillage (16, 18, 20, 22) monté dans la région de bord de la partie d'extrémité annulaire, lequel, dans une position de fermeture, peut venir en prise autour d'une bride de forme annulaire (24) de l'ouverture de la tuyère de telle sorte que le corps de fermeture de tuyère introduit dans la tuyère, fixé contre l'ouverture de tuyère, ferme ladite tuyère,
- un dispositif de blocage (26, 28) pouvant être déplacé entre une position de blocage et une position de libération, lequel, dans la position de blocage, bloque le dispositif de verrouillage dans la position de fermeture et, dans la position de libération, libère le dispositif de verrouillage, de telle sorte que le corps de fermeture de tuyère puisse être enlevé de la tuyère, et
- un dispositif d'actionnement (30) pour déplacer le dispositif de blocage,
**caractérisé en ce que**
le dispositif de verrouillage présente au moins un support de levier oscillant (16) supporté de manière articulée sur la région de bord de la partie d'extrémité (14) par le biais d'un axe (21) et un levier oscillant (20) accouplé au support de levier oscillant (16) par le biais de l'axe (21) et d'un élément élastique (22), l'élément élastique exerçant une force sur le levier oscillant pour amener le levier oscillant dans une position dans laquelle il vient en prise dans la position de fermeture du dispositif de verrouillage autour de la bride annulaire de l'ouverture de la tuyère, et
le dispositif de blocage présente un goujon de blocage (26) et une goupille de blocage (28) supportée de manière déplaçable dans la direction axiale par rapport au corps de fermeture de tuyère dans une douille de guidage (40) disposée dans le corps de fermeture de tuyère, le goujon de blocage pouvant être déplacé par le biais de la goupille de blocage depuis la position de blocage dans la position de libération, le goujon de blocage, dans la position de blocage, bloquant l'au moins un support de levier oscillant de telle sorte que celui-ci ne puisse pas être pivoté à l'écart de la tuyère et, dans la position de libération du goujon de blocage, l'au moins un support de levier oscillant pouvant être pivoté à l'écart de la tuyère conjointement avec le levier oscillant.

2. Dispositif selon la revendication 1, **caractérisé en ce que** le corps de fermeture de tuyère présente une partie centrale (32) se raccordant à la partie d'extrémité annulaire, avec un alésage (34) pour le support du dispositif de blocage et une partie d'extrémité (36) se raccordant à la partie centrale avec un joint d'étanchéité (38) pour fermer la tuyère.

3. Dispositif selon la revendication 1 ou 2, **caractérisé en ce que** le dispositif de verrouillage présente un premier élément élastique (18), en particulier un ressort de torsion, lequel élément exerce sur le dispositif de verrouillage une force suffisamment grande pour qu'il puisse être amené dans une position d'ouverture dans laquelle il ne peut pas venir en prise autour de la bride annulaire de l'ouverture de la tuyère.

4. Dispositif selon l'une quelconque des revendications précédentes, **caractérisé en ce qu'**un ressort de rappel (42) est disposé dans le corps de fermeture de tuyère, lequel presse la goupille de verrouillage dans une position de repos.

5. Dispositif selon l'une quelconque des revendications précédentes, **caractérisé en ce que** le dispositif d'actionnement présente un fil ou un câble (30) qui est connecté par une extrémité au dispositif de blocage et qui sert d'auxiliaire de préhension pour le dispositif.

6. Tuyère (10), en particulier tuyère d'expansion d'un moteur de fusée, comprenant un dispositif pour fermer et ouvrir la tuyère selon l'une quelconque des revendications précédentes.
